# EUROPÄISCHE PATENTSCHRIFT

(11) **EP 3 706 598 B1**
(45) Veröffentlichungstag und Bekanntmachung des Hinweises auf die Patenterteilung: **05.01.2022**
(21) Anmeldenummer: 17808755.7
(22) Anmeldetag: 09.11.2017
(51) Int. Cl.: A47B 9/20, F16M 11/28

(54) **TELESKOPIERBARE SÄULE, INSBESONDERE FÜR MÖBEL, WIE TISCHE, UND TISCH MIT EINER DERARTIGEN SÄULE**
TELESCOPIC COLUMN, MORE PARTICULARLY FOR PIECES OF FURNITURE, SUCH AS TABLES, AND TABLE WITH COLUMN OF THIS KIND
MONTANT TÉLESCOPIQUE, EN PARTICULIER POUR MEUBLES, TELS QUE DES TABLES, ET TABLE POURVUE D'UN TEL MONTANT TÉLESCOPIQUE

(43) Veröffentlichungstag der Anmeldung: 16.09.2020
(73) Patentinhaber: Oelschläger Metalltechnik GmbH, 27318 Hoya (DE)
(72) Erfinder: JACOBS, Michael, 27211 Bassum (DE)
(74) Vertreter: Manasse, Uwe
(86) Internationale Anmeldenummer: PCT/DE2017/100951
(87) Internationale Veröffentlichungsnummer: WO 2019/091504

(56) Entgegenhaltungen:
- EP-A1- 1 163 862
- US-A1- 2005 002 591
- US-A1- 2016 102 693
- US-B2- 7 908 981

## Beschreibung

Die vorliegende Erfindung betrifft eine teleskopierbare Säule, insbesondere für Möbel, wie Tische, und einen Tisch mit einer teleskopierbaren Säule.

Neue Büros werden häufig mit höhenverstellbaren Tischen zur Verbesserung der ergonomischen Position des Benutzers ausgestattet und bieten die Möglichkeit, im Stehen oder im Sitzen zu arbeiten. Die hohe Nachfrage nach zum Beispiel Tischen mit Hubsäulen bzw. teleskopierbaren Tischbeinen machen einen bezahlbares Standardsystem attraktiv.

Hubsäulen werden herkömmlicherweise aus extrudierten Metallrohren mit speziellen Längen zusammengesetzt. Um ein reibungsloses und leises lineares Gleiten der Rohre relativ zueinander sicherzustellen, werden dünne Verbundkörper, umfassend einen Stützkörper, zwischen den Rohren bzw. Profilen verwendet. Derartige dünne Elemente sind beispielsweise in der US 2005/0002591 A1 offenbart. Bedingt durch vorgesehene Gleitverlagerung sind die Verbundkörper abwechselnd an einem Innenrohr und an einem Außenrohr ortsfest gehalten, so dass eine wechselseitige Abstützung erreicht wird.

In der US 7,908,981 B2 ist eine Kombination von zwei verschiedenen Arten von Gleitelementen aus Kunststoff bekannt. Durch Verwendung von Nuten, die sich entlang der Rohre befinden, wird ein lineares Gleiten möglich.

Eine zusätzliche Rolle der Gleitelemente besteht darin, Toleranzen des Rohrprofils im Querschnitt sowie kleine Variationen in den Abmessungen entlang der Rohrachse zu kompensieren. Gemäß der US 2005/0002591 A1 wird dies durch eine aushärtende elastische Komponente (Ausgleichsschicht) in Kombination mit den Verbundkörpern erfüllt. In der US 2013/0221171 A1 wird dies durch Verwendung der Elastizität eines speziell ausgebildeten Bereichs unter dem Gleitelement erzielt. Schließlich wird dies gemäß der DE 10020866 A1 erreicht, indem das Gleitmaterial direkt in den Raum zwischen die Rohre zugeführt wird.

US 2016/102693 A1 offenbart eine teleskopierbare Säule, umfassend zwei teleskopartig axial ineinander verschiebbare Teleskopelemente mit Längsnuten, wobei die Nuten so angeordnet sind, daß in ihnen Stützkörper zur Lagerung und Führung der Teleskopelemente befestigt werden.

Zusätzlich zur Verwendung von mehreren zahlreichen Geometrien, die zu einer großen Materialmenge beitragen, erfordern solche Lösungen zusätzliche Herstell- und Montageschritte, so dass sie nur aufwendig und teuer zu realisieren sind.

Der vorliegenden Erfindung liegt somit die Aufgabe zugrunde, eine Gleitabstützung bereitzustellen, die kostengünstiger herstellbar und montierbar ist.

Erfindungsgemäß wird diese Aufgabe gelöst durch eine teleskopierbare Säule mit den Merkmalen des Anspruchs 1.

Weiterhin wird diese Aufgabe gelöst durch einen Tisch mit mindestens einer Säule nach einem der Ansprüche 1 bis 8.

Bei der Säule ist vorgesehen, dass das äußere Teleskopelement auf seiner Innenseite mindestens eine sich in seiner Längsrichtung erstreckende Führungsnut aufweist und die Gleitfläche der Stützkörper eine korrespondierende Nase oder Führungsrippe aufweist, die zum Gleiten in der Führungsnut gestaltet ist.

Vorteilhafterweise verläuft die Haupterstreckung der Gleitfläche in Längsrichtung des inneren Teleskopelements.

Alternativ kann die Haupterstreckung der Gleitfläche quer zur Längsrichtung des inneren Teleskopelements verlaufen.

Vorteilhafterweise weist das innere Teleskopelement mindestens eine Rastöffnung auf und weisen die Stützkörper auf der Anlagezone zur Befestigung an dem Teleskopelement mindestens ein korrespondierendes Rastelement auf.

Erfindungsgemäß weist die Gleitfläche mindestens eine zur Führungsrippe parallele Gleitrippe auf und weist die Gleitrippe eine geringere Höhe als die Führungsrippe auf.

In einer besonderen Ausführungsform sind mindestens drei, vorzugsweise genau drei, der Stützkörper in einer Ebene umlaufend auf der Außenseite des inneren Teleskopelements, vorzugsweise äquidistant, angeordnet.

Weiterhin kann vorgesehen werden, dass die Stützkörper in mindestens zwei axial versetzten Ebenen auf der Außenseite des inneren Teleskopelements angeordnet sind.

Insbesondere kann dabei vorgesehen sein, dass mindestens ein Stützkörper einer Ebene zu mindestens einem Stützkörper in einer anderen Ebene in Umfangsrichtung versetzt ist.

Schließlich kann vorgesehen sein, dass die Stützkörper aus Kunststoff bestehen oder Kunststoff enthalten.

Der vorliegenden Erfindung liegt die überraschende Erkenntnis zu Grunde, dass durch Verwendung eines "Standardgleitelements" mit vereinfachter Geometrie, das an dem Profil in werkzeugloser Weise befestigbar ist, die Montage auf einen Bereich des Profils beschränkt bzw. reduziert werden kann, wodurch Montagekosten gespart werden. Das "Standardgleitelement" kann mit einer großen Vielzahl von Profildurchmessern benutzt werden, da es die Profiloberfläche nur teilweise, insbesondere "punktuell" bedeckt.

Zudem kann das "Standardgleitelement" in diversen Dicken hergestellt und bereitgestellt werden, um die Stabilität der linearen Bewegung zu verbessern und eine zu große Winkelabweichung der Profile zueinander zu vermeiden.

Die vorliegende Erfindung kann auch bei Hubsäulen angewandt werden, die aus zwei oder mehr überlappend angeordneten Profilen bestehen, wobei der Durchmesser der Profile von oben nach unten, aber auch von unten nach oben, zunehmen kann. Zudem können die Rohre bzw. Profile nicht nur quadratische, rechteckige oder kreisrunde Querschnittsprofile aufweisen.

Weitere Merkmale und Vorteile der Erfindung ergeben sich aus den beigefügten Ansprüchen und aus der nachfolgenden Beschreibung von mehreren Ausführungsbeispielen anhand der schematischen Zeichnungen, in denen:
- Figur 1:: einen höhenverstellbaren Tisch mit zwei teleskopierbaren Säulen (Hubsäulen) gemäß einer besonderen Ausführungsform der Erfindung in perspektivischer Ansicht zeigt;
- Figur 2:: drei Rundrohre, die eine teleskopierbare Säule bilden, in Vollauszug in perspektivischer Ansicht (links), und in teilweise transparenter Seitenansicht (rechts) zeigt;
- Figur 3:: eine Detailansicht in Explosionsdarstellung von einer Gleitabstützung zwischen zwei teleskopartig axial ineinander verschiebbaren Teleskopelementen (Rohren) in perspektivischer Ansicht (links) und in Seitenansicht (rechts) zeigt;
- Figur 4:: Details eines Stützkörpers der Gleitabstützung von Figur 3 in verschiedenen Ansichten zeigt,
- Figur 5:: eine Detailansicht in Explosionsdarstellung von einer Gleitabstützung zwischen zwei teleskopartig axial ineinander verschiebbaren Teleskopelementen (Rohren) in perspektivischer Ansicht (links) und in Seitenansicht (rechts) gemäß einer weiteren besonderen Ausführungsform der vorliegenden Erfindung zeigt;
- Figur 6:: Details eines Stützkörpers der Gleitabstützung von Figur 5 in verschiedenen Ansichten zeigt,
- Figur 7:: eine Detailansicht in Explosionsdarstellung von einer Gleitabstützung zwischen zwei teleskopartig axial ineinander verschiebbaren Teleskopelementen (Rohren) in perspektivischer Ansicht (links) und in Seitenansicht (rechts) gemäß einer weiteren besonderen Ausführungsform der Erfindung zeigt;
- Figur 8.: Details eines Stützkörpers der Gleitabstützung von Figur 7 in verschiedenen Ansichten zeigt und
- Figur 9:: eine Detailansicht in Explosionsdarstellung von einer Gleitabstützung zwischen zwei teleskopartig axial ineinander verschiebbaren Teleskopelementen (Rohren) in perspektivischer Ansicht (links) und in Seitenansicht (rechts) gemäß einer weiteren besonderen Ausführungsform der Erfindung zeigt.

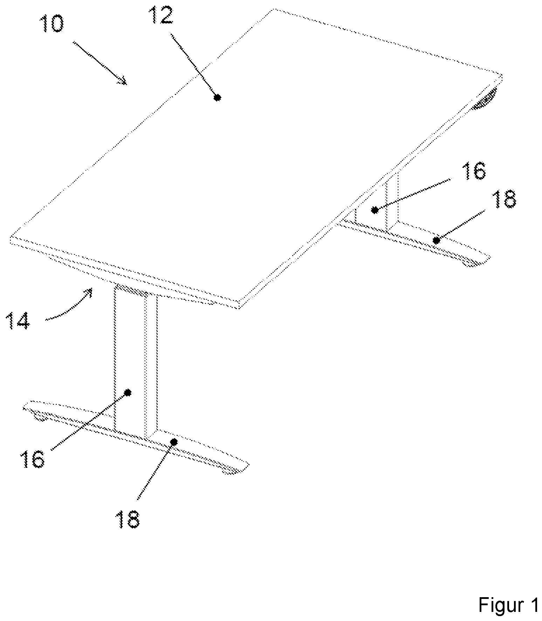

Der in der Figur 1 gezeigte höhenverstellbare Tisch 10 weist u. a. eine Tischplatte 12 auf einem Tischgestell 14 auf, das u. a. auf jeder Seite eine teleskopierbare Säule 16 und jeweils einen Tischfuß 18 aufweist. Im gezeigten Beispiel weisen die Säulen 16 einen quadratischen oder rechteckigen Querschnitt auf. Selbstverständlich kann der Querschnitt beispielsweise auch rund oder oval sein.

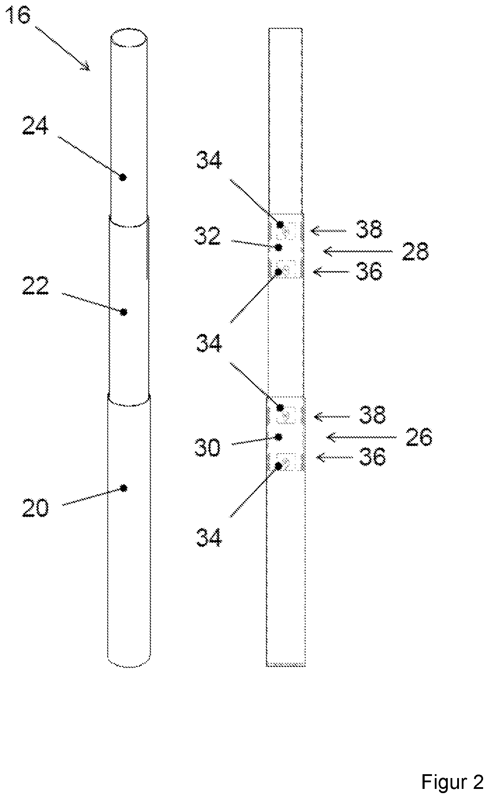

Die in der Figur 2 beispielhaft gezeigte teleskopierbare Säule 16, z. B. für einen Tisch, umfasst drei teleskopartig axial ineinander verschiebbare Teleskopelemente 20, 22 und 24, wobei in diesem Beispiel das oberste Teleskopelement 24 im Inneren des mittleren Teleskopelements 22 und das mittlere Teleskopelement 22 im Inneren des unteren Teleskopelements 20 verschiebbar ist. Dies wird durch eine jeweilige Gleitabstützung 26 bzw. 28 ermöglicht, die in diesem Beispiel im Bereich des unteren Längsendes 30 des mittleren Teleskopelements 22 und im Bereich des unteren Längsendes 32 des oberen Teleskopelements 24 angeordnet ist. Jede der beiden Gleitabstützungen 26 und 28 weist Stützkörper 34 mit einer äußeren Gleitfläche auf, die in diesem Beispiel identisch gestaltet und jeweils in zwei axial ineinander versetzten Ebenen 36 und 38 umlaufend äquidistant angeordnet sind. In diesem Beispiel sind in jeder Ebene vier Stützkörper 34 im Abstand von 90° zueinander umlaufend angeordnet.

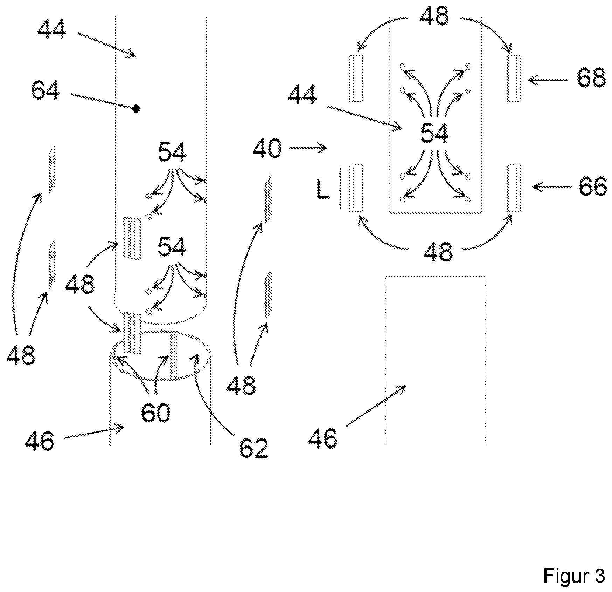

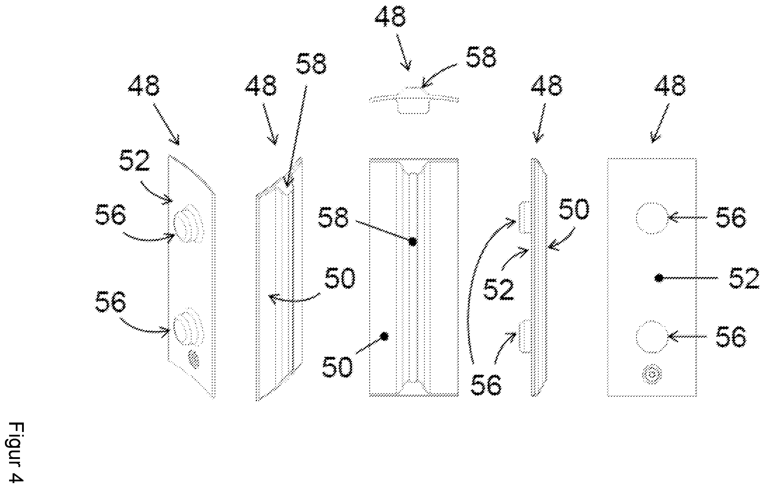

Figur 3 zeigt eine weitere Gleitabstützung 40. Diese ist im Bereich des unteren Längsendes des oberen Teleskopelements 44, das in dem unteren Teleskopelement 46 gleitet, angeordnet. Die Gleitabstützung 40 umfasst Stützkörper 48. Die Stützkörper 48 sind identisch und weisen eine eine Gleitfläche bildende Anlagezone 50 sowie eine gegenüberliegende Anlagezone 52 zur Befestigung am oberen Teleskopelement 44 auf (siehe Figur 4). Die Befestigung an dem oberen Teleskopelement 44 erfolgt über jeweils zwei in axialer Richtung übereinander beabstandete Rastöffnungen 54 und korrespondierende Rastelemente 56 auf der Anlagezone 52 (siehe auch Figur 4). Auf der Anlagezone 50 weist jeder Stützkörper 48 eine sich in axialer Richtung des oberen Teleskopelements 44 erstreckende Führungsrippe 58 auf, die in einer sich in Längsrichtung des unteren Teleskopelements 46 auf der Innenseite 62 des unteren Teleskopelements 46 erstreckenden Führungsnut 60 gleitet.

Die Stützkörper 48 sind auf der Außenseite 64 des oberen Teleskopelements 44 angeordnet, und zwar in diesem Beispiel in zwei in axialer Richtung übereinander versetzten Ebenen 66 und 68, wobei in jeder Ebene vier Stützkörper 48 äquidistant über den Umfang angeordnet sind. Die Stützkörper 48 in einer Ebene liegen zu korrespondierenden Stützkörpern 48 in der anderen Ebene in axialer Richtung auf einer Linie L.

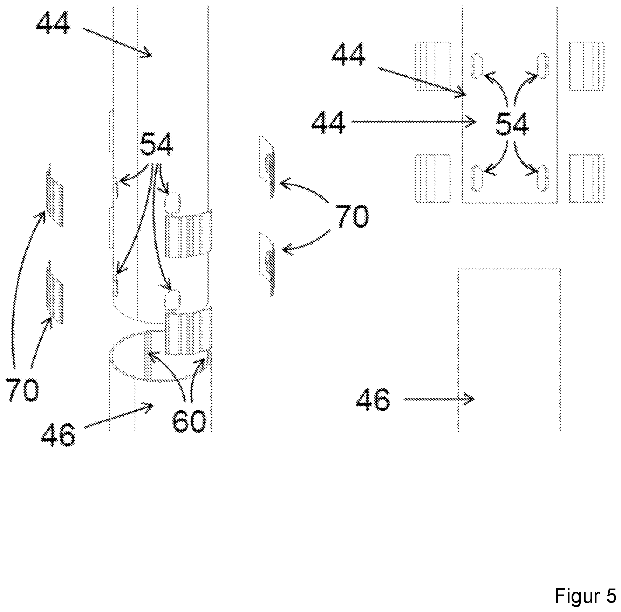

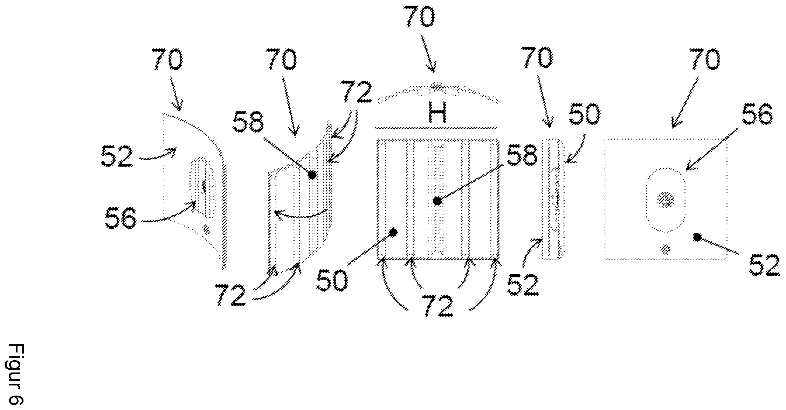

Die in den Figuren 5 und 6 gezeigte Ausführungsform von Stützkörpern 70 unterscheidet sich von den in den Figuren 3 und 4 gezeigten Stützkörpern im Wesentlichen darin, dass die Haupterstreckung H (siehe Figur 6) nicht in Längsrichtung des oberen Teleskopelements 44, sondern quer dazu verläuft. Zudem weisen die Stützkörper 70 auf der Anlagezone 52 nur ein, in diesem Beispiel mittiges, Rastelement 56 auf. Demzufolge wird in dem unteren Längsende 42 des oberen Teleskopelements 44 nur jeweils eine Rastöffnung 54 zur Befestigung des Stützkörpers 70 an dem oberen Teleskopelement 44 benötigt.

Ferner weisen die in den Figuren 5 und 6 gezeigten Stützkörper 70 zu beiden Seiten der Führungsrippe 58 jeweils zwei parallele Gleitrippen 72 auf.

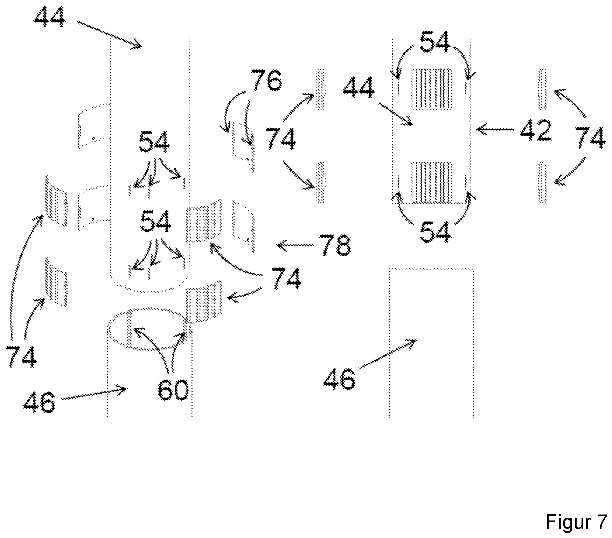

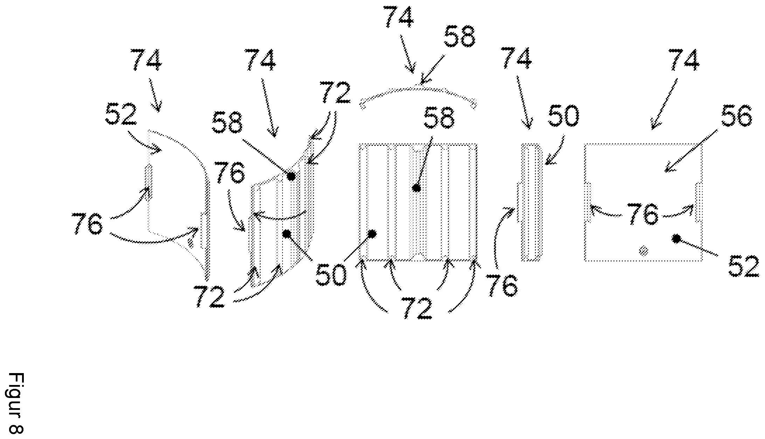

Die in den Figuren 7 und 8 gezeigte Ausführungsform von Stützkörpern 74 unterscheidet sich von den in den Figuren 5 und 6 gezeigten Stützkörpern im Wesentlichen darin, dass anstelle eines mittigen Rastelements 56 auf jeder kurzen Seite der Anlagezone 52 jeweils eine Rastnase 76 (siehe insbesondere Figur 8) als Rastelement vorgesehen ist. Demzufolge weist das obere Teleskopelement 44 im Bereich des unteren Längsendes 42 korrespondierende Rastöffnungen 54 auf.

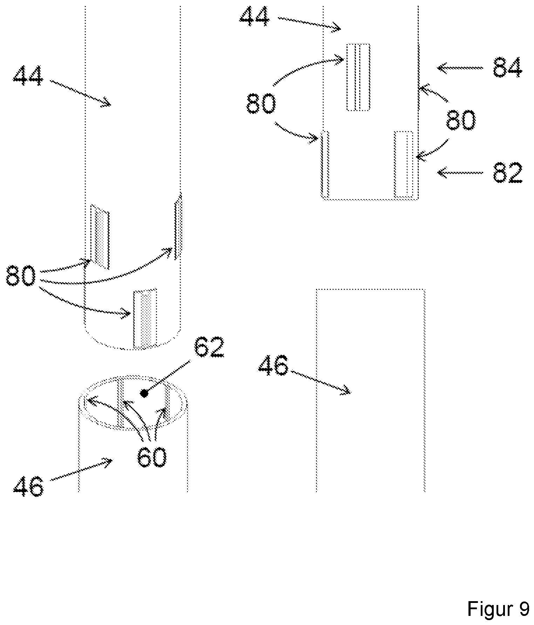

Die in der Figur 9 gezeigte Gleitabstützung unterscheidet sich von der in der Figur 3 gezeigten Gleitabstützung im Wesentlichen darin, dass die Stützkörper 80 in einer Ebene 82 zu den Stützkörpern 80 in einer dazu axial versetzten Ebene 84 um 45° versetzt sind. Dementsprechend weist das untere Teleskopelement 46 auf seiner Innenseite 62 korrespondierende Führungsnuten 60 auf, die im Winkel von 45° umlaufend angeordnet sind.

**Bezugszeichenliste**

| | | | |
|---|---|---|---|
| 10 | Tisch | 82 | Ebene |
| 12 | Tischplatte | 84 | Ebene |
| 14 | Tischgestell | H | Haupterstreckung |
| 16 | Säule | L | Linie |
| 18 | Tischfuß | | |
| 20, 22, 24 | Teleskopelemente | | |
| 26, 28 | Gleitabstützungen | | |
| 30, 32 | Längsenden | | |
| 34 | Stützkörper | | |
| 36, 38 | Ebenen | | |
| 40 | Gleitabstützungen | | |
| 42 | Längsende | | |
| 44 | oberes Teleskopelement | | |
| 46 | unteres Teleskopelement | | |
| 48 | Stützkörper | | |
| 50, 52 | Anlagenzone | | |
| 54 | Rastöffnung | | |
| 56 | Rastelemente | | |
| 58 | Führungsrippe | | |
| 60 | Führungsnut | | |
| 62 | Innenseite | | |
| 64 | Außenseite | | |
| 66,68 | Ebenen | | |
| 70 | Stützkörper | | |
| 72 | Gleitrippe | | |
| 74 | Stützkörper | | |
| 76 | Rastnase | | |
| 78 | Gleitabstützung | | |
| 80 | Stützkörper | | |

## Patentansprüche

1. Teleskopierbare Säule (16), insbesondere für Möbel, wie Tische (10), umfassend:
- mindestens zwei teleskopartig axial ineinander verschiebbare Teleskopelemente (44, 46), und
- eine Gleitabstützung (26; 28; 78) zwischen den mindestens zwei Teleskopelementen, wobei die Gleitabstützung nur im Bereich eines Längsendes (30; 32; 42) eines inneren (44) der beiden Teleskopelemente Stützkörper (34; 48; 70; 74; 80) umfasst, die Stützkörper jeweils eine Gleitfläche bildende Anlagezone (50) und eine gegenüberliegende Anlagezone (52) zur Befestigung an dem Teleskopelement aufweisen und an der Außenseite (64) des inneren Teleskopelements werkzeuglos befestigt sind,
wobei das äußere (46) der beiden Teleskopelemente auf seiner Innenseite (62) mindestens eine sich in seiner Längsrichtung erstreckende Führungsnut (60) aufweist und die Gleitfläche der Stützkörper eine korrespondierende Nase oder Führungsrippe (58) aufweist, die zum Gleiten in der Führungsnut gestaltet ist, und wobei die Gleitfläche mindestens eine zur Führungsrippe (58) parallele Gleitrippe (72) aufweist und die Gleitrippe eine geringere Höhe als die Führungsrippe aufweist.

2. Säule (16) nach Anspruch 1, wobei die Haupterstreckung der Gleitfläche in Längsrichtung des inneren Teleskopelements verläuft.

3. Säule (16) nach Anspruch 1, wobei die Haupterstreckung der Gleitfläche quer zur Längsrichtung des inneren Teleskopelements verläuft.

4. Säule (16) nach einem der Ansprüche 1 bis 3, wobei das innere Teleskopelement mindestens eine Rastöffnung (54) aufweist und die Stützkörper auf der Anlagezone zur Befestigung an dem Teleskopelement mindestens ein korrespondierendes Rastelement (56; 76) aufweisen.

5. Säule (16) nach einem der vorangehenden Ansprüche, wobei mindestens drei, vorzugsweise genau drei, der Stützkörper (34; 48; 70; 74) in einer Ebene umlaufend auf der Außenseite (64) des inneren Teleskopelements, vorzugsweise äquidistant, angeordnet sind.

6. Säule (16) nach einem der vorangehenden Ansprüche, wobei die Stützkörper in mindestens zwei axial versetzten Ebenen (36; 38; 66; 68; 82; 84) auf der Außenseite (60) des inneren Teleskopelements angeordnet sind.

7. Säule (16) nach Anspruch 6, wobei mindestens ein Stützkörper einer Ebene zu mindestens einem Stützkörper in einer anderen Ebene in Umfangsrichtung versetzt ist.

8. Säule (16) nach einem der vorangehenden Ansprüche, wobei die Stützkörper (34; 48; 70; 74; 80) aus Kunststoff bestehen oder Kunststoff enthalten.

9. Tisch (10) mit mindestens einer Säule (16) nach einem der vorangehenden Ansprüche.

## Claims

1. Telescopable column (16), in particular for items of furniture, such as desks (10), comprising:
- at least two telescopic elements (44, 46) which can be displaced axially in one another in a telescope-like manner, and
- a sliding support (26; 28; 78) between the at least two telescopic elements, wherein the sliding support comprises support bodies (34; 48; 70; 74; 80) only in the region of a longitudinal end (30; 32; 42) of an inner one (44) of the two telescopic elements, the support bodies in each case having an abutment zone (50) which forms a sliding surface and having an opposite abutment zone (52) for fastening to the telescopic element, and being fastened to the outer side (64) of the inner telescopic element without tools,
wherein the outer one (46) of the two telescopic elements, on the inner side (62) thereof, has at least one guide groove (60) which extends in the longitudinal direction of said element, and the sliding surface of the support bodies has a corresponding lug or guide rib (58) which is designed to slide in the guide groove, and wherein the sliding surface has at least one sliding rib (72) parallel to the guide rib (58), and the sliding rib has a lower height than the guide rib.

2. Column (16) according to Claim 1, wherein the main extent of the sliding surface runs in the longitudinal direction of the inner telescopic element.

3. Column (16) according to Claim 1, wherein the main extent of the sliding surface runs transversely with respect to the longitudinal direction of the inner telescopic element.

4. Column (16) according to one of Claims 1 to 3, wherein the inner telescopic element has at least one latching opening (54), and the support bodies have at least one corresponding latching element (56; 76) on the abutment zone for fastening to the telescopic element.

5. Column (16) according to one of the preceding claims, wherein at least three, preferably precisely three, of the support bodies (34; 48; 70; 74) are, preferably equidistantly, arranged in one plane in a circumferential manner on the outer side (64) of the inner telescopic element.

6. Column (16) according to one of the preceding claims, wherein the support bodies are arranged in at least two axially offset planes (36; 38; 66; 68; 82; 84) on the outer side (60) of the inner telescopic element.

7. Column (16) according to Claim 6, wherein at least one support body of one plane is offset in the circumferential direction with respect to at least one support body in another plane.

8. Column (16) according to one of the preceding claims, wherein the support bodies (34; 48; 70; 74; 80) are composed of plastic or contain plastic.

9. Desk (10) having at least one column (16) according to one of the preceding claims.

## Revendications

1. Montant télescopique (16), notamment pour des meubles, tels que des tables (10), comprenant :
- au moins deux éléments télescopiques (44, 46) pouvant se déplacer axialement l'un dans l'autre de manière télescopique, et
- un support de coulissement (26 ; 28 ; 78) entre les au moins deux éléments télescopiques, le support de coulissement comprenant des corps de support (34 ; 48 ; 70 ; 74 ; 80) uniquement dans la zone d'une extrémité longitudinale (30 ; 32 ; 42) d'un élément télescopique intérieur (44) parmi les deux éléments télescopiques, les corps de support présentant chacun une zone d'application (50) formant une surface de coulissement et une zone d'application opposée (52) pour la fixation à l'élément télescopique et étant fixés sans outil sur le côté extérieur (64) de l'élément télescopique intérieur,
l'élément télescopique extérieur (46) parmi les deux éléments télescopiques comprenant sur son côté intérieur (62) au moins une rainure de guidage (60) s'étendant dans sa direction longitudinale, et la surface de coulissement des corps de support comprenant un bec ou une nervure de guidage correspondant (58), qui est conçu pour coulisser dans la rainure de guidage, et la surface de coulissement comprenant au moins une nervure de coulissement (72) parallèle à la nervure de guidage (58), et la nervure de coulissement présentant une hauteur plus faible que la nervure de guidage.

2. Montant (16) selon la revendication 1, l'étendue principale de la surface de coulissement s'étendant dans la direction longitudinale de l'élément télescopique intérieur.

3. Montant (16) selon la revendication 1, l'étendue principale de la surface de coulissement s'étendant perpendiculairement à la direction longitudinale de l'élément télescopique intérieur.

4. Montant (16) selon l'une quelconque des revendications 1 à 3, l'élément télescopique intérieur comprenant au moins une ouverture d'encliquetage (54) et les corps de support comprenant au moins un élément d'encliquetage correspondant (56 ; 76) sur la zone d'application pour la fixation à l'élément télescopique.

5. Montant (16) selon l'une quelconque des revendications précédentes, au moins trois, de préférence exactement trois, des corps de support (34 ; 48 ; 70 ; 74) étant agencés, de préférence de manière équidistante, dans un plan circonférentiel sur le côté extérieur (64) de l'élément télescopique intérieur.

6. Montant (16) selon l'une quelconque des revendications précédentes, les corps de support étant agencés dans au moins deux plans décalés axialement (36 ; 38 ; 66 ; 68 ; 82 ; 84) sur le côté extérieur (60) de l'élément télescopique intérieur.

7. Montant (16) selon la revendication 6, au moins un corps de support d'un plan étant décalé dans la direction périphérique par rapport à au moins un corps de support dans un autre plan.

8. Montant (16) selon l'une quelconque des revendications précédentes, les corps de support (34 ; 48 ; 70 ; 74 ; 80) étant constitués de matière plastique ou contenant de la matière plastique.

9. Table (10) munie d'au moins un montant (16) selon l'une quelconque des revendications précédentes.
